# EUROPÄISCHE PATENTSCHRIFT

(11) **EP 2 334 547 B1**
(45) Veröffentlichungstag und Bekanntmachung des Hinweises auf die Patenterteilung: **02.03.2016**
(21) Anmeldenummer: 09783790.0
(22) Anmeldetag: 06.10.2009
(51) Int. Cl.: B64C 1/12, B64C 1/06, B64C 1/00

(54) **STRUKTURELEMENT ZUR VERSTÄRKUNG EINER RUMPFZELLE EINES FLUGZEUGS**
STRUCTURAL ELEMENT FOR REINFORCING A FUSELAGE OF AN AIRCRAFT
ÉLÉMENT STRUCTURAL POUR RENFORCER UNE CELLULE DU FUSELAGE D'UN AVION

(30) Priorität: 13.10.2008 DE 102008042782; 13.10.2008 US 104849 P
(43) Veröffentlichungstag der Anmeldung: 22.06.2011
(73) Patentinhaber: Airbus Operations GmbH, 21129 Hamburg (DE)
(72) Erfinder: OHRLOFF, Nikolaus, 21614 Buxtehude (DE); BEUMLER, Thomas, 21635 Jork (DE); DAVERSCHOT, Derk, 28279 Bremen (DE); PLOKKER, Matthijs, 21698 Harsefeld (DE)
(74) Vertreter: Isarpatent
(86) Internationale Anmeldenummer: PCT/EP2009/062979
(87) Internationale Veröffentlichungsnummer: WO 2010/043516

(56) Entgegenhaltungen:
- EP-A1- 1 495 858
- EP-A2- 1 291 279
- WO-A1-2008/033017
- US-B2- 7 080 805

## Beschreibung

Die Erfindung betrifft ein Strukturelement zur Verstärkung einer Rumpfzelle eines Flugzeugs, wobei das Strukturelement ein Verstärkungsprofil aufweist, das einstückig mit einem metallischen Material, insbesondere mit einem Aluminiumlegierungsmaterial oder mit einem Titanlegierungsmaterial, gebildet ist. Dokument EP1291279, das als nächstliegendes Stand der Technik angesehen wird, offenbart ein solcher strukturelment.

Eine Rumpfzelle eines Flugzeugs wird im Allgemeinen mit mehreren tonnenförmigen, hintereinander angeordneten und durch Quernähte verbundenen Rumpfsektionen gebildet. Jede Rumpfsektion ist mit einer Vielzahl von Ringspanten ausgesteift, deren Außenseiten mit einer Rumpfzellenhaut beplankt sind. Zur weiteren Erhöhung der Stabilität der Rumpfsektionen ist eine Vielzahl von Verstärkungsprofilen innenseitig auf der Rumpfzellenhaut angeordnet, die in Längsrichtung der Rumpfsektion jeweils parallel zueinander verlaufen. Die Verstärkungsprofile sind darüber hinaus in der Regel gleichmäßig zueinander beabstandet über den Umfang der Rumpfsektion verteilt angeordnet.

Außergewöhnliche Belastungen treten in einem mittleren Abschnitt der Rumpfzelle im Bereich der Spanten auf, in dem die Tragflächen an die Rumpfzellenstruktur angebunden sind. Noch höhere Lasten treten bei besonderen Flugzeugtypen, wie zum Beispiel im Fall von als Hochdecker ausgebildeten Transportflugzeugen auf, bei denen das Fahrwerk im Bereich des Rumpfmittelabschnittes unterhalb der Rumpfzelle angeordnet ist. Bei diesen Flugzeugtypen erfolgt bei jedem Landevorgang eine starke Stauchung des mittleren Rumpfabschnittes, was insbesondere in den dort vorhandenen Ringspanten zu extrem hohen Lastspitzen führt.
Spante und andere Verstärkungsprofile, die insbesondere zur Aussteifung des Rumpfmittelabschnittes bei derartigen Flugzeugtypen dienen, müssen demzufolge über eine hohe Ermüdungsresistenz bei einer Vielzahl von Lastzyklen verfügen und zudem beim Auftreten von Rissen über schadenstolerante Eigenschaften verfügen. Der Begriff der Schadenstoleranz meint in diesem Kontext, dass das Auftreten eines Risses nicht zum unmittelbaren Versagen des Bauteils führt und der Rissfortschritt wenn auch nicht vollständig gestoppt, so doch zumindest verlangsamt wird.

Eine grundsätzliche Möglichkeit zur Verringerung der Geschwindigkeit des Rissfortschrittes in mechanisch hoch beanspruchten Bauteilen besteht in einer Erhöhung der Materialstärke. Dies führt jedoch zu einer in der Regel unvertretbaren Gewichtserhöhung von Verstärkungsprofilen wie zum Beispiel Spanten und Trägern.

Aufgabe der Erfindung ist es daher, ein Verstärkungsprofil, insbesondere einen Spant oder einen Träger zur Aussteifung einer Rumpfzellenstruktur in einem mechanisch hochbeanspruchten Bereich einer Flugzeugrumpfzelle, zu schaffen, das auch bei einer großen Anzahl von Lastzyklen nur einen verlangsamten Rissfortschritt zeigt und damit eine hohe Schadenstoleranz aufweist.

Diese Aufgabe wird durch ein Strukturelement mit den Merkmalen des Patentanspruchs 1 gelöst.

Dadurch, dass das Verstärkungsprofil zumindest bereichsweise mit einer Lasche versehen ist,
ergibt sich eine hohe Schadenstoleranz und daneben ein vorteilhaftes Ermüdungsverhalten. Das Fortschreiten beispielsweise infolge höher mechanischer Beanspruchung etwaig auftretender Risse wird durch die zusätzlich aufgebrachte Lasche zumindest erheblich verlangsamt, wenn nicht gar gestoppt. Bei dem Verstärkungsprofil handelt es sich insbesondere um einen Spant bzw. ein Spantsegment oder um einen geradlinigen Träger, die insbesondere in den genannten mechanisch hoch beanspruchten Bereichen der Rumpfzelle Verwendung finden.

Eine vorteilhafte Weiterbildung des Strukturelements sieht vor, dass die Lasche mit dem Verstärkungsprofil mittels einer Fügeschicht verklebt ist.
Hierdurch wird bevorzugt eine vollflächige Verbindung zwischen der Lasche und dem Verstärkungsprofil erreicht, wodurch sich eine hohe Schadenstoleranz ergibt.

Nach Maßgabe einer weiteren vorteilhaften Fortbildung des Strukturelements ist die Lasche mit dem Verstärkungsprofil zumindest bereichsweise vernietet und/oder verschraubt.
Infolge dieser Ausgestaltung wird das Abschälen der Lasche vom Verstärkungsprofil verhindert. Denn durch eine - wenn auch nur bereichsweise - Abschälung der Lasche vom Verstärkungsprofil würden sich die schadenstoleranten Eigenschaften des Verstärkungsprofils schlagartig verringern.

Die Lasche ist mit einem Schichtmaterial, mit einem Fasermetalllaminat, mit einer Vielzahl von übereinander angeordneten Metalllagen und Kunststofflagen gebildet ist, wobei sich Metalllagen und Kunststofflagen jeweils abwechseln.
Im Fall eines mit einem Aluminiumlegierungsmaterial gebildeten Verstärkungsprofils kann die Lasche grundsätzlich mit einer hochfesten Aluminiumlegierung, mit einer Titanlegierung oder mit einem Fasermetalllaminat wie zum Beispiel mit Glare^{®} gebildet sein. Ein derartiges Fasermetalllaminat bzw. Schichtmaterial ist mit einer Vielzahl von übereinander geschichteten dünnen Blechen bzw. Folien hergestellt, die mit einem Aluminiumlegierungsmaterial gebildet sind und die jeweils vollflächig durch glasfaserverstärkte Epoxidharzschichten geringer Dicke miteinander verklebt sind. Im Fall eines mit einem Titanlegierungsmaterial gebildeten Verstärkungsprofils kann die Lasche auch mit einem Fasermetalllaminat gebildet sein, das mit abwechselnd übereinander angeordneten und mit kohlefaserverstärkten Epoxidharzschichten verklebten Titanblechen bzw. Titanfolien wie zum Beispiel "TiGR" bzw. "TiGra"
(so genanntes "Titan Graphit"-Fasermetalllaminat) aufgebaut ist.
Umfangreiche Belastungsversuche der Anmelderin an mit Laschen versehenen Verstärkungsprofilen zeigten jedoch, dass durch die Aufbringung von Laschen aus Aluminium oder aus Titan bei weitem nicht die schadenstoleranten Eigenschaften erzielbar sind, die mit einer aufgeklebten Lasche aus einem Fasermetalllaminat, wie beispielsweise Glare^{®} erreicht werden können. Auch bei Verstärkungsprofilen, die mit einem Titanlegierungsmaterial gebildet sind, lassen sich die schadenstoleranten Eigenschaften durch das Aufkleben von Laschen, die mit dem vorstehend erwähnten Fasermetalllaminat "TiGr" bzw. "TiGra" gebildet sind, erheblich verbessern.

Nach Maßgabe einer weiteren vorteilhaften Ausgestaltung des Strukturelements sind die Metalllagen mit einer Aluminiumlegierung und die Kunststofflagen mit einem glasfaserverstärkten duroplastischen Kunststoff gebildet.
In Folge der abwechselnd übereinandergeschichteten Lagen aus einer Aluminiumlegierung und den Schichten aus einem glasfaserverstärkten duroplastischen Kunststoffmaterial verfügt das Schichtmaterial bzw. das Fasermetalllaminat über ein ausgezeichnetes Ermüdungsverhalten und darüber hinaus auch über eine hohe Schadenstoleranz. Durch den Einsatz von Glasfasern werden insbesondere Korrosionsprobleme zwischen den Aluminiumlagen verhindert.

Eine weitere vorteilhafte Weiterbildung des Strukturelements sieht vor, dass die Metalllagen mit einer Titaniegierung und die Kunststofflagen mit einem kohlefaserverstärkten duroplastischen Kunststoff, insbesondere mit einem Epoxidharz, gebildet sind.
Durch das Aufkleben einer Lasche, die mit einer Vielzahl von übereinander geschichteten, mit einem Titanlegierungsmaterial gebildeten Lagen aufgebaut ist, die jeweils mit kohlefaserarmierten Lagen eines duroplastischen Kunststoffes, insbesondere einem Epoxidharz, vollflächig verklebt sind, können zum Beispiel mit einem Titanlegierungsmaterial hergestellte Verstärkungsprofile, wie beispielsweise Spantsegmente oder Träger, verstärkt werden.

Eine weitere vorteilhafte Weiterentwicklung des Strukturelements sieht vor, dass eine Materialstärke der Lasche mindestens zu einem Ende der Lasche hin abnimmt. Hierdurch wird die Entstehung von Kerbspannungen in einem Auslauf- bzw. Anschlussbereich der Lasche verhindert.

Eine weitere vorteilhafte Ausgestaltung des Verstärkungsprofils sieht vor, dass die Fügeschicht mit mindestens einer Klebeschicht und mit mindestens einer Prepreg-Schicht gebildet ist.
Hierdurch wird ein besonders inniger Verbund zwischen der aufgeklebten Lasche und dem Verstärkungspröfil erreicht. In der Regel erfolgt die Verklebung der Lasche mit dem Verstärkungsprofil in einem Autoklaven in einem zusätzlichen Fertigungsschritt unter gleichzeitiger Anwendung von Druck und Temperatur.

Gemäß einer weiteren Ausgestaltung ist vorgesehen, dass die mindestens eine Klebeschicht mit einem duroplastischen Kunststoff, insbesondere mit einem Epoxidharz, gebildet ist und die mindestens eine Prepreg-Schicht mit einem faserverstärkten duroplastischen Kunststoff, insbesondere mit einem glasfaserverstärkten und/oder mit einem kohlefaserverstärkten Epoxidharz, gebildet ist.
Durch die Kombination einer kompakten Klebeschicht mit mindestens einer Prepreg-Schicht wird die Qualität der Fügeschicht nochmals verbessert.
Infolge dieses Aufbaus der Klebeschicht wird zunächst eine kontrollierte bzw. moderierte Delaminierung im Fall einer Rissbildung im Spant erzielt. Zum anderen wird hierdurch die Rissinitiierung in der Lasche verzögert. Um diese vorteilhaften Effekte zu erreichen, verlaufen die Glasfasern vorzugsweise quer zum Rissverlauf und parallel zur Hauptlastrichtung. Je weniger Delaminationen auftreten, desto mehr Resttragfähigkeit des Spantes bleibt erhalten.

Weitere vorteilhafte Ausgestaltungen des Strukturelements sind in den nachfolgenden Patentansprüchen dargelegt.

In der Zeichnung zeigt:
- **Fig. 1**: Eine schematische Querschnittsdarstellung durch das erfindungsgemäße Strukturelement,
- **Fig. 2**: eine prinzipielle Darstellung der Wirkungsweise des schadenstoleranten Strukturelements,
- **Fig. 3**: ein Ausführungsbeispiel einer Lasche,
- **Fig. 4**: ein als Spantsegment ausgeführtes Verstärkungsprofil auf dessen Innengurt die Lasche gemäß Fig. 3 aufgeklebt ist,
- **Fig. 5**: eine detaillierte Schnittdarstellung durch zwei Endbereiche der Lasche nach der Fig. 3, und
- **Fig. 6**: ein Diagramm zum prinzipiellen Vergleich der schadenstoleranten Wirkung von drei verschiedenen Laschenmaterialien.

In der Zeichnung weisen dieselben konstruktiven Elemente jeweils die gleiche Bezugsziffer auf.

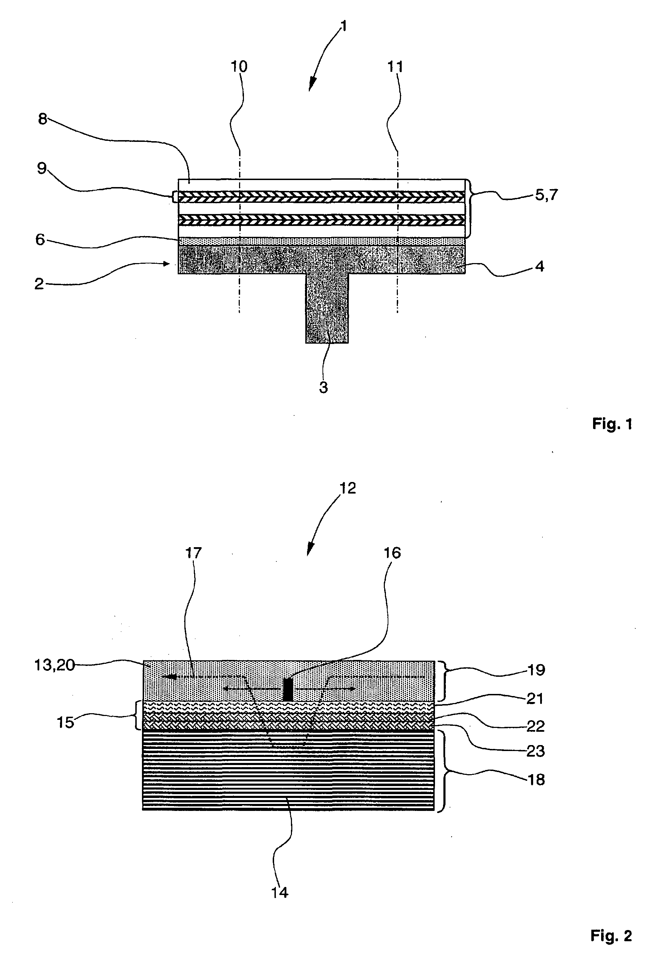

Die **Fig. 1** zeigt einen schematischen Querschnitt durch das erfindungsgemäße Strukturelement.
Ein Strukturelement 1 umfasst unter anderem ein Verstärkungsprofil 2, das in Fig. 1 exemplarisch als ein Spantsegment 3 zur Aussteifung einer nicht dargestellten Rumpfzelle eines Flugzeugs ausgeführt ist. Das Spantsegment 3 ist mit einem geeigneten, hochfesten Aluminiumlegierungsmaterial gefertigt und weist eine DoppelT-förmige Querschnittsgeometrie auf. Alternativ kann das Spantsegment 3 auch eine U-förmige oder eine L-förmige Querschnittsgeometrie aufweisen. Das Spantsegment 3 kann beispielsweise durch Fräsen, Schmieden oder Strangpressen in einem Stück aus dem vollen Aluminiumlegierungsmaterial herausgearbeitet werden. Ein Innenflansch 4 des Spantsegmentes 3 ist erfindungsgemäß vollflächig mit einer Lasche 5 beklebt. Durch die Lasche 5 wird erfindungsgemäß die Ausbreitung von Rissen innerhalb des Innengurtes im Idealfall nahezu aufgehalten.
Die vollflächige Verklebung der Lasche 5 mit dem Innenflansch 4 des Spantsegmentes 3 erfolgt durch eine Fügeschicht 6. Die Lasche 5 selbst ist im Fall eines Spantsegmentes 3, das mit einer Aluminiumlegierung gebildet ist, bevorzugt mit einem Schichtmaterial 7 bzw. einem Fasermetalllaminat wie zum Beispiel Glare® gebildet.
Im Fall eines mit einer Titanlegierung gebildeten Spantes 3 oder Spantsegmentes kann die Lasche 5 alternativ mit einem Fasermetalllaminat wie zum Beispiel "TiGr" bzw. "TiGra" gebildet sein, das mit einer lagenweise Abfolge von Titanfolien bzw. Titanblechen aufgebaut ist, die jeweils vollflächig mit einem kohlefaserverstärkten Epoxidharz miteinander verklebt sind.
Das Schichtmaterial 7 umfasst im gezeigten Ausführungsbeispiel drei dünne Metalllagen und drei dünne Kunststofflagen, die jeweils vollflächig miteinander verklebt sind. Von den Lagen sind eine Metalllage 8 und eine Kunststofflage 9 repräsentativ für die Restlichen mit einer Bezugsziffer versehen. Innerhalb des Schichtmaterials 7 wechseln sich die Metalllagen und die Kunststofflagen jeweils ab, wobei bevorzugt die Oberseite und die Unterseite des Schichtmaterials mit einer Metalllage abschließen. In diesem Fall ist die Anzahl der Kunststofflagen stets um 1 kleiner als die Anzahl der Metalllagen. Die folienartigen Metalllagen geringer Materialstärke sind beispielsweise mit einer Aluminiumlegierung gebildet, während die dünnen Kunststofflagen mit einem glasfaserverstärkten duroplastischen Kunststoffmaterial aufgebaut sind. Als ein geeignetes duroplastisches Kunststoffmaterial hat sich beispielsweise Epoxidharz erwiesen. Die Glasfasern innerhalb der Kunststofflagen verlaufen in der Darstellung der Fig. 1 senkrecht zur Zeichenebene, das heißt in der Umfangsrichtung des Spantsegmentes 3, da in dieser Richtung die relevanten, auslegungsbestimmenden Lasten auftreten.
Das Schichtmaterial 7 wird in einem Autoklaven unter gleichzeitiger Anwendung von Druck und Temperatur vorgefertigt und durch Fräsen auf ein vorgegebenes Sollmaß gebracht. Das so vorkonfektionierte Schichtmaterial 7 kann gegebenenfalls, beispielsweise um eine spannungsfreie Verklebung mit gekrümmten Ringspantsegmenten zu ermöglichen, eine zumindest eindimensional gekrümmte Oberflächengeometrie aufweisen. Ferner kann die Lasche 5 eine sich stetig endseitig verringernde Materialstärke aufweisen, um einen Auslauf zu schaffen und die Entstehung von Kerbspannungen im Anschlussbereich an den Innengurt 4 des Spantsegmentes 3 zu verringern. Da die Verklebung der Lasche 5 mit dem Spantsegment 3 bevorzugt in einem Autoklaven unter gleichzeitiger Anwendung von Druck und/oder Temperatur erfolgt, kann eine Anpassung der Lasche 5 - zumindest bei einer nicht zu hohen Materialstärke der Lasche 5 - auch durch Biegen während des Klebeprozesses im Autoklaven erfolgen.
Um das Abschälen der Lasche 5 vom Innenflansch 4 zu verhindern, sind bereichsweise Verbindungselemente 10,11, insbesondere Nieten oder Schrauben, vorgesehen.

Die **Fig. 2** illustriert schematisch das Wirkungsprinzip des erfindungsgemäßen Strukturelementes.
Ein Strukturelement 12 ist mit einem Verstärkungsprofil 13 gebildet, auf das eine Lasche 14 mittels einer Fügeschicht 15 vollflächig aufgeklebt ist. Die Lasche 14 ist ebenfalls mit einem Schichtmaterial bzw. Fasermetalllaminat, wie die in Fig. 1 erläuterte Lasche 5, aufgebaut. Ein durch einen Riss 16 gestörter Kraftfluss 17 wird aus dem Verstärkungsprofil 13 über die Fügeschicht 15 in die Lasche 14 eingeführt und durch diese über den Riss 16 hinweg wieder in das Strukturelement 13 zurück geleitet. Der Riss 16 hat das Verstärkungsprofil 13 noch nicht vollständig durchsetzt. Im Ergebnis wirkt die Lasche 14 wie eine Brücke für den Kraftfluss 17 über den Riss 16, wodurch ein Fortschreiten des Risses 16 zumindest verlangsamt, wenn nicht sogar ganz aufgehalten wird. Die beiden entgegen gerichteten kleinen schwarzen Pfeile beidseits des Risses 16 deuten die durch den Riss 16 hervorgerufene Bewegungstendenz der beiderseitig an den Riss 16 angrenzenden Abschnitte des Verstärkungsprofils 13 an. Eine Materialstärke 18 der Lasche 14 entspricht vorzugsweise in etwa dem 0,5- bis dreifachen einer Materialstärke 19 des Verstärkungsprofils 13 bzw. eines Innenflansches 20 des Verstärkungsprofils 13.
Die Fügeschicht 15 besteht vorzugsweise aus einer reinen Klebeschicht 21 und mindestens zwei Prepreg-Schichten 22,23, wobei die Klebeschicht 21 in unmittelbarem Kontakt mit dem Verstärkungsprofil 13 steht und die untere Prepreg-Schicht 23 mit der Lasche 14 verbunden ist. Die Klebeschicht 21 ist beispielsweise mit einem Epoxidharz ohne Faserverstärkung gebildet, während die beiden Prepreg-Schichten 22,23 mit einem mit Kohlefasern und/oder mit Glasfasern armierten Epoxidharz aufgebaut sind.

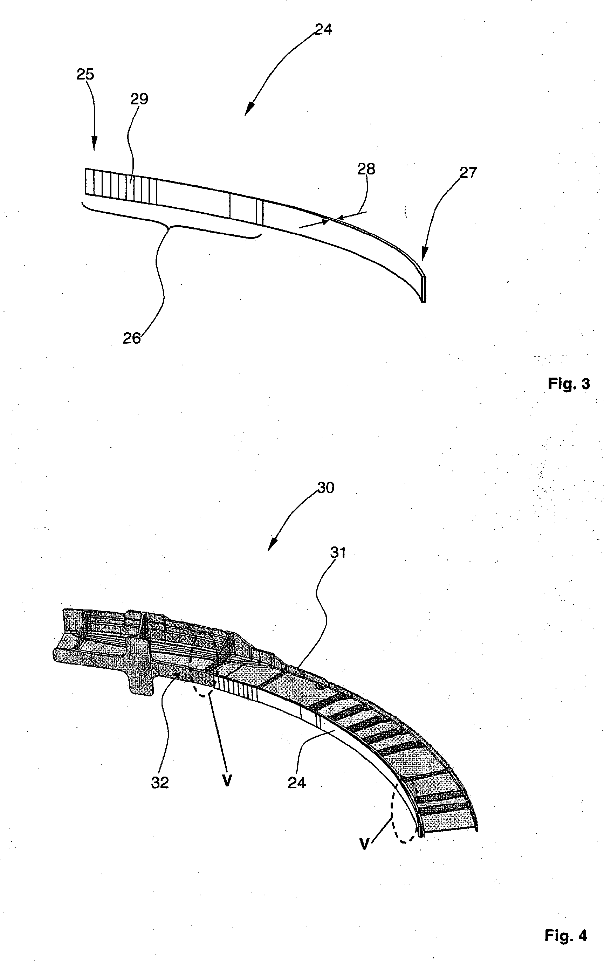

Die **Fig. 3** illustriert ein technisches Ausführungsbeispiel einer Lasche zur Schaffung des erfindungsgemäßen Strukturelementes.
Eine erfindungsgemäß mit einem Schichtmaterial bzw. mit einem Fasermetallaminat ausgebildete Lasche 24 weist an einem ersten Ende 25 einen Auslauf 26 auf, während ein hiervon wegweisendes, zweites Ende 27 der Lasche 24 stumpf endet. D.h. eine Materialstärke 28 der Lasche 24 wird in Richtung des ersten Endes 25 gestuft reduziert, wobei der Auslauf 26 eine Vielzahl von Stufen aufweist, von denen eine Stufe 29 repräsentativ für alle übrigen mit einer Bezugsziffer versehen ist. Eine Stufenhöhe entspricht in etwa der jeweiligen Dicke der zur Bildung des Schichtmaterials der Lasche 24 eingesetzten Kunststofflagen bzw. der Metalllagen,

Die **Fig. 4** zeigt ein Strukturelement 30, das mit einem gekrümmten Spantsegment 31 als ein Verstärkungsprofil gebildet ist, auf dessen Innenflansch 32 die Lasche 24 vorzugsweise vollflächig aufgeklebt wurde. Das Spantsegment 31 verfügt über eine angenähert doppel-T-förmige Querschnittsgeometrie.

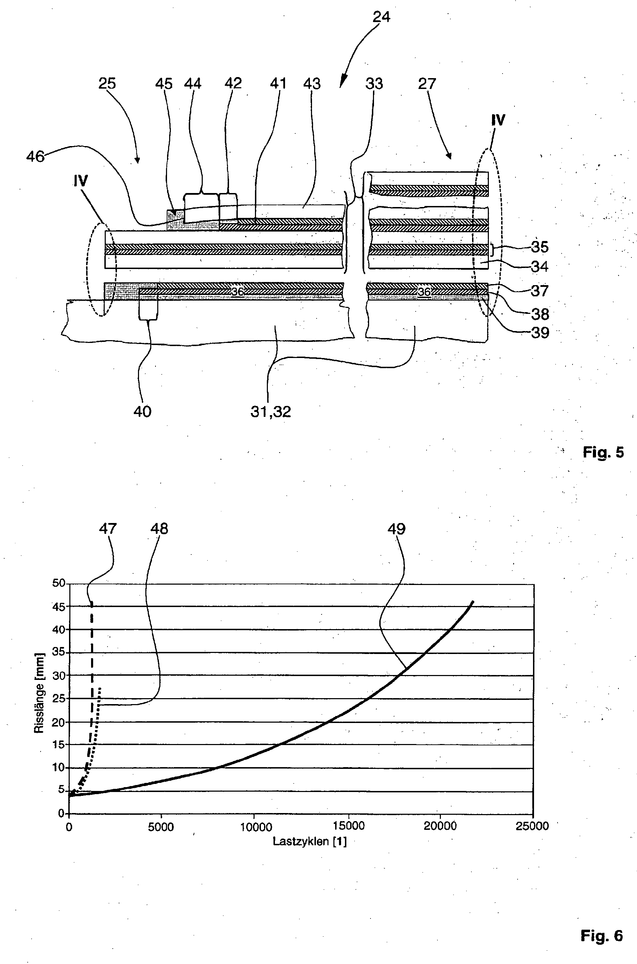

Die **Fig. 5** zeigt eine detaillierte Schnittdarstellung der beiden endseitigen Bereiche V der Lasche 24 aus der Fig. 4.
Die Lasche 24 ist entsprechend zu den bereits vorstehend beschriebenen Laschen mit einem Schichtmaterial 33 bzw. mit einem Fasermetalllaminat aufgebaut, das mit einer alternierenden Abfolge von übereinander liegenden und miteinander vollflächig verklebten Metalllagen und Kunststofflagen aufgebaut ist. Von den Metalllagen und den Kunststofflagen ist eine durchgehende, untere Metalllage 34 und eine darüber liegende Kunststofflage 35 repräsentativ für alle übrigen Lagen mit einer Bezugsziffer versehen. Sämtliche Kunststofflagen bestehen aus jeweils zwei, nicht mit einer Bezugsziffer versehenen Schichten, in denen die in die Kunstharzmatrix eingebetteten Glaserfasern einen unterschiedlichen oder gleichen Verlauf haben können. Grundsätzlich verlaufen die zur Verstärkung in den Kunststofflagen eingesetzten Glasfasern, zumindest im Fall von gekrümmten Spantsegmenten 31, parallel zu dessen Umfangsrichtung, da in dieser Orientierung des Raumes die höchsten mechanischen Beanspruchungen auftreten. Im Allgemeinen sind die Glasfasern im Schichtmaterial kraftflussoptimiert angeordnet.

Unterhalb der Metalllage 34 verläuft eine Fügeschicht 36, die zwei Prepreg-Schichten 37,38 sowie eine Klebeschicht 39 aufweist. Unterhalb der Klebeschicht 39 liegt der Innenflansch 32 des Spantsegmentes 31.
Zwischen den, nicht mit einer Bezugsziffer versehenen Enden, der beiden Prepreg-Schichten 37,38 besteht ein kleiner Versatz 40, das heißt die Prepreg-Schichten 37,38 weisen eine geringfügig unterschiedliche Länge auf. Dieser Versatz 40 ist von der Klebeschicht 39 umfasst, so dass die Endabschnitte der Prepreg-Schichten 37,38 nicht offen auslaufen, sondern mit einem "Endstück" aus reinem, das heißt nicht faserarmierten Kunstharz bzw. dem zur Bildung der Klebeschicht 39 eingesetzten Kunstharz abgeschlossen sind. Die Metalllage 34 ist lediglich aus Gründen der besseren zeichnerischen Übersicht in vertikaler Richtung versetzt zur Fügeschicht 36 dargestellt, ist in der Realität aber vollflächig mit der Metalllage verklebt. Eine weitere Kunststofflage 41 weist gleichfalls einen geringfügigen Versatz 42 auf. Mit der Kunststofflage 41 ist eine weitere Metalllage 43 verklebt, die in einem nicht bezeichneten Endabschnitt um einen kleinen Betrag aus der horizontalen Position infolge des Autoklavendrucks beim Klebeprozess nach unten gebogen bzw. gekrümmt wird. Der nach unten gekrümmte Endabschnitt der Metalllage 43 überkragt ein Ende der Kunststofflage 41 - einschließlich des Versatzes 42 - um einen kleinen Überstand 44. Ein Bereich 45 direkt unterhalb des Überstandes 44 und neben einer (End-)Kante 46 der Metalllage 43 ist mit einem Kunstharzmaterial zur Bildung einer Einfassung verfüllt. Dieses Kunstharzmaterial findet bevorzugt auch für die Klebeschicht 39 innerhalb der Fügeschicht 36 Verwendung. Durch diese Randeinfassung der Metalllage 43 und der Kunststofflage 41 wird erreicht, dass die Kante 46 der Metalllage 43 und das Ende der Kunststofflage 41 gleichfalls vollständig in das Kunstharzmaterial eingebettet sind und nicht "offen" enden bzw. auslaufen, wodurch ein optimales Zusammenfügen der Lasche 24 mit dem Innenflansch 32 erzielt wird. Im Ergebnis wird im Bereich des Auslaufs 26 bzw. im Übergang zwischen der Lasche 24 und dem Spant 31 sowie innerhalb des Schichtmaterials bzw. des Fasermetalllaminats der Lasche 24 eine so genannte Metall-Metall-Klebung erzielt, die ein vorteilhafteres Rissinitiierungsverhalten aufweist.

Die **Fig. 6** zeigt ein Diagramm mit drei Kurven. Auf der Ordinate ist eine jeweilige Risslänge in Millimetern im Aluminiumspant abgetragen, während auf der Abszisse die Anzahl der auf ein jeweils betrachtetes Strukturelement einwirkenden Lastzyklen dargestellt ist. Bei dem Strukturelement handelt es sich wiederum um einen Aluminiumspant als Verstärkungsprofil. Die mechanische Spannung in dem Aluminiumspant ist in allen drei Kurven gleich.
Für die Darstellung wurde probeweise ein (Anfangs-)Riss von etwa 4 mm Länge in das Verstärkungsprofil des Strukturelementes eingebracht und dessen Vergrößerung in Abhängigkeit von der Anzahl der einwirkenden Lastzyklen gemessen bzw. berechnet und in dem Diagramm abgetragen.
Eine gestrichelte Kurve 47 gibt hierbei die (berechnete) Vergrößerung der Risslänge im Fall eines ungelaschten Aluminiumspantes wieder, während die punktierte Linie 48 den (berechneten) Verlauf darstellt, der sich beim Einsatz einer auf einen Aluminiumspant aufgenieteten Titanlasche ergibt. Die mit einer durchgezogenen Linie dargestellte (gemessene) Kurve 49 stellt sich ein, wenn die auf den Aluminiumspant aufgeklebte Lasche mit einem Schichtmaterial, wie zum Beispiel mit Glare^{®} gebildet ist. Eindeutig ist zu erkennen, dass sich die Vergrößerung eines Risses bzw. der Rissfortschritt durch die Verwendung einer Lasche aus dem erfindungsgemäß Anwendung findenden Schichtmaterial - auch im Fall der Einwirkung einer sehr hohen Anzahl von Lastzyklen - extrem verlangsamt und keine kritischen Werte erreicht.

Somit erreicht das erfindungsgemäß ausgebildete Strukturelement mit zusätzlich aufgebrachter Lasche aus einem Schichtmaterial bzw. einem Fasermetalllaminat eine außerordentlich hohe Schadenstoleranz, so dass es insbesondere für einen Einsatz in hoch beanspruchten Bereichen der Rumpfzellenstruktur, beispielsweise in einem mittleren Rumpfzellenabschnitt eines Hochdeckers, prädestiniert ist.

### Bezugszeichenliste

- 1: Strukturelement
- 2: Verstärkungsprofil
- 3: Spantsegment
- 4: Innenflansch (Spantsegment)
- 5: Lasche
- 6: Fügeschicht
- 7: Schichtmaterial (Fasermetalllaminat vorkonfektioniert)
- 8: Metalllage
- 9: Kunststofflage
- 10: Niet
- 11: Niet
- 12: Strukturelement
- 13: Verstärkungsprofil
- 14: Lasche
- 15: Fügeschicht
- 16: Riss
- 17: Kraftfluss
- 18: Materialstärke (Lasche)
- 19: Materialstärke (Verstärkungsprofil bzw. Flansch)
- 20: Flansch (Verstärkungsprofil)
- 21: Klebeschicht
- 22: Prepreg-Schicht
- 23: Prepreg-Schicht
- 24: Lasche
- 25: erstes Ende (Lasche)
- 26: Auslauf
- 27: zweites Ende (Lasche
- 28: Materialstärke (Lasche))
- 29: Stufe
- 30: Strukturelement
- 31: Spantsegment
- 32: Innenflansch
- 33: Schichtmaterial
- 34: Metalllage
- 35: Kunststofflage
- 36: Fügeschicht
- 37: Prepreg-Schicht
- 38: Prepreg-Schicht
- 39: Klebeschicht
- 40: Versatz
- 41: Kunststofflage
- 42: Versatz
- 43: Metalllage
- 44: Überstand
- 45: Bereich
- 46: Kante
- 47: Kurve (Aluminiumspant ungelascht)
- 48: Kurve (Aluminiumspant mit Titanlasche)
- 49: Kurve (Aluminiumspant mit Fasermetalllaminat-Lasche)

## Patentansprüche

1. Strukturelement (1,12,30) zur Verstärkung einer Rumpfzelle eines Flugzeugs, wobei das Strukturelement (1,12,30) ein Verstärkungsprofil (2,13) aufweist, das einstückig mit einem metallischen Material gebildet ist, wobei das Verstärkungsprofil (2,13) zumindest bereichsweise mit einer Lasche (5,14,24) versehen ist und die Lasche (5,14,24) mit einem Schichtmaterial (7,33) mit einem Fasermetalllaminat, das eine Vielzahl von übereinander angeordneten Metalllagen (8,34,43) und Kunststofflagen (9,35,41) aufweist, wobei sich Metalllagen (8,34,43) und Kunststofflagen (9,35,41) jeweils abwechseln, gebildet ist, **dadurch gekennzeichnet, dass** ein nach unten gekrümmter Endabschnitt der Metalllage (43) ein Ende der Kunststofflage (41) um einen Überstand (44) überkragt, wobei ein Bereich (45) direkt unterhalb des Überstandes (44) und neben einer Endkante (46) der Metalllage (43) mit einem Kunstharzmaterial zur Bildung einer Einfassung verfüllt ist.

2. Strukturelement (1,12,30) nach Patentanspruch 1, **dadurch gekennzeichnet, dass** die Lasche (5,14,24) mit dem Verstärkungsprofil (2,13) mittels einer Fügeschicht (6,15,36) verklebt ist.

3. Strukturelement (1,12,30) nach Patentanspruch 1 oder 2, **dadurch gekennzeichnet, dass** die Lasche (5,14,24) mit dem Verstärkungsprofil (2,13) zumindest bereichsweise vernietet und/oder verschraubt ist.

4. Strukturelement (1,12,30) nach Patentanspruch 1, **dadurch gekennzeichnet, dass** die Metalllagen (8,34,43) mit einer Aluminiumlegierung und die Kunststofflagen (9,35,41) mit einem glasfaserverstärkten duroplastischen Kunststoff gebildet sind.

5. Strukturelement (1,12,30) nach Patentanspruch 1, **dadurch gekennzeichnet, dass** die Metalllagen (8,34,43) mit einer Titanlegierung und die Kunststofflagen (9,35,41) mit einem kohlefaserverstärkten duroplastischen Kunststoff, insbesondere mit einem Epoxidharz, gebildet sind.

6. Strukturelement (1,12,30) nach einem der Patentansprüche 1 bis 5, **dadurch gekennzeichnet, dass** eine Materialstärke (18) der Lasche (5,14,24) mindestens zu einem Ende (25,27) der Lasche (5,14,24) hin abnimmt.

7. Strukturelement (1,12,30) nach einem der Patentansprüche 1 bis 6, **dadurch gekennzeichnet, dass** die Fügeschicht (6,15,36) mit mindestens einer Klebeschicht (21,39) und mit mindestens einer Prepreg-Schicht (22,23,37,38) gebildet ist.

8. Strukturelement (1,12,30) nach Patentanspruch 7, **dadurch gekennzeichnet, dass** die mindestens eine Klebeschicht (21,39) mit einem duroplastischen Kunststoff, insbesondere mit einem Epoxidharz, gebildet ist und die mindestens eine Prepreg-Schicht (22,23,37,38) mit einem faserverstärkten duroplastischen Kunststoff, insbesondere mit einem glasfaserverstärkten und/oder mit einem kohlefaserverstärkten Epoxidharz, gebildet ist.

9. Strukturelement (1,12,30) nach einem der Patentansprüche 1 bis 8, **dadurch gekennzeichnet, dass** das Verstärkungsprofil (2,13) ein Spantsegment (31) ist und die Lasche (24) zumindest bereichsweise auf einen Innenflansch (32) und/oder einen Außenflansch des Spantsegmentes (31) aufgeklebt ist.

10. Strukturelement (1,12,30) nach Patentanspruch 9, **dadurch gekennzeichnet, dass** die Glasfasern in den Kunststofflagen (9,35,41) der Lasche (24) im Wesentlichen parallel zu einer Umfangsrichtung des Spantsegmentes (31) verlaufen.

11. Strukturelement (1,12,30) nach einem der Patentansprüche 1 bis 8, **dadurch gekennzeichnet, dass** das Verstärkungsprofil (2,13) ein Träger ist und die Lasche (5,14,24) zumindest bereichsweise auf einen Flansch des Trägers aufgeklebt ist.

12. Strukturelement (1,12,30) nach Patentanspruch 11, **dadurch gekennzeichnet, dass** die Glasfasern in den Kunststofflagen (9,35,41) der Lasche (5,14,24) im Wesentlichen kraftflussorientiert verlaufen.

## Claims

1. Structural element (1, 12, 30) for reinforcing a fuselage cell of an aeroplane, the structural element (1, 12, 30) comprising a reinforcing profile (2, 13) which is formed in a single piece using a metal material, the reinforcing profile (2, 13) being provided at least in regions with a strap (5, 14, 24), and the strap (5, 14, 24) being formed using a layer material (7, 33) comprising a fibre metal laminate which comprises a plurality of metal layers (8, 34, 43) and plastics material layers (9, 35, 41) arranged on top of one another, metal layers (8, 34, 43) and plastics material layers (9, 35, 41) respectively alternating, **characterised in that** a downwardly curved end portion of the metal layer (43) overhangs an end of the plastics material layer (41) by way of a projection (44), a region (45) directly below the projection (44) and alongside an end edge (46) of the metal layer (43) being filled will a synthetic resin material to form a border.

2. Structural element (1, 12, 30) according to claim 1, **characterised in that** the strap (5, 14, 24) is glued to the reinforcing profile (2, 13) by means of a joining layer (6, 15, 36).

3. Structural element (1, 12, 30) according to either claim 1 or claim 2, **characterised in that** the strap (5, 14, 24) is riveted and/or screwed to the reinforcing profile (2, 13) at least in regions.

4. Structural element (1, 12, 30) according to claim 1, **characterised in that** the metal layers (8, 34, 43) are formed using an aluminium alloy and the plastics material layers (9, 35, 41) are formed using a glass-fibre-reinforced thermosetting plastics material.

5. Structural element (1, 12, 30) according to claim 1, **characterised in that** the metal layers (8, 34, 43) are formed using a titanium alloy and the plastics material layers (9, 35, 41) are formed using a carbon-fibre-reinforced thermosetting plastics material, in particular using an epoxy resin.

6. Structural element (1, 12, 30) according to any of claims 1 to 5, **characterised in that** a material thickness (18) of the strap (5, 14, 24) decreases at least towards one end (25, 27) of the strap (5, 14, 24).

7. Structural element (1, 12, 30) according to any of claims 1 to 6, **characterised in that** the joining layer (6, 15, 36) is formed using at least one adhesive layer (21, 39) and using at least one prepreg layer (22, 23, 37, 38).

8. Structural element (1, 12, 30) according to claim 7, **characterised in that** the at least one adhesive layer (21, 39) is formed using a thermosetting plastics material, in particular using an epoxy resin, and the at least one prepreg layer (22, 23, 37, 38) is formed using a fibre-reinforced thermosetting plastics material, in particular using a glass-fibre-reinforced and/or using a carbon-fibre-reinforced epoxy resin.

9. Structural element (1, 12, 30) according to any of claims 1 to 8, **characterised in that** the reinforcing profile (2, 13) is a former segment (31) and the strap (24) is glued at least in regions to an inner flange (32) and/or an outer flange of the former segment (31).

10. Structural element (1, 12, 30) according to claim 9, **characterised in that** the glass fibres in the plastics material layers (9, 35, 41) of the strap (24) extend substantially parallel to a peripheral direction of the former segment (31).

11. Structural element (1, 12, 30) according to any of claims 1 to 8, **characterised in that** the reinforcing profile (2, 13) is a support and the strap (5, 14, 24) is glued at least in regions to a flange of the support.

12. Structural element (1, 12, 30) according to claim 11, **characterised in that** the glass fibres in the plastics material layers (9, 35, 41) of the strap (5, 14, 24) extend substantially orientated with the flux of force.

## Revendications

1. Élément structural (1, 12, 30) destiné à renforcer un fuselage d'un avion, l'élément structural (1, 12, 30) comportant un profilé de renforcement (2, 13) qui est formé d'un seul tenant avec un matériau métallique, le profilé de renforcement (2, 13) étant muni au moins par sections d'une patte (5, 14, 24) et la patte (5, 14, 24) étant formée d'un matériau en couches (7, 33) avec un stratifié fibres-métal qui présente une pluralité de couches en métal (8, 34, 43) et de couches en matière plastique (9, 35, 41) disposées les unes au-dessus des autres, les couches en métal (8, 34, 43) et les couches en matière plastique (9, 35, 41) alternant respectivement, **caractérisé en ce qu'**une section d'extrémité de la couche en métal (43) courbée vers le bas dépasse d'une extrémité de la couche en matière plastique (41) par une projection (44), une section (45) étant directement remplie avec un matériau en résine synthétique en dessous de la projection (44) et à côté d'un bord d'extrémité (46) de la couche en métal (43) pour former une bordure.

2. Élément structural (1, 12, 30) selon la revendication 1, **caractérisé en ce que** la patte (5, 14, 24) est collée au profilé de renforcement (2, 13) à l'aide d'une couche d'assemblage (6, 15, 36).

3. Élément structural (1, 12, 30) selon la revendication 1 ou 2, **caractérisé en ce que** la patte (5, 14, 24) est rivetée et/ou vissée au moins par sections au profilé de renforcement (2, 13).

4. Élément structural (1, 12, 30) selon la revendication 1, **caractérisé en ce que** les couches en métal (8, 34, 43) sont formées d'un alliage d'aluminium et les couches en matière plastique (9, 35, 41) d'un plastique duroplastique renforcé par des fibres de verre.

5. Élément structural (1, 12, 30) selon la revendication 1, **caractérisé en ce que** les couches en métal (8, 34, 43) sont formées d'un alliage en titane et les couches en matière plastique (9, 35, 41) d'un plastique duroplastique renforcé par des fibres de carbone, en particulier d'une résine époxy.

6. Élément structural (1, 12, 30) selon une des revendications 1 à 5, **caractérisé en ce qu'**une épaisseur de matière (18) de la patte (5, 14, 24) diminue au moins vers une extrémité (25, 27) de la patte (5, 14, 24).

7. Élément structural (1, 12, 30) selon une des revendications 1 à 6, **caractérisé en ce que** la couche d'assemblage (6, 15, 36) est formée d'au moins une couche de colle (21, 39) et d'au moins une couche de pré-imprégné (22, 23, 37, 38).

8. Élément structural (1, 12, 30) selon la revendication 7, **caractérisé en ce que** l'au moins une couche de colle (21, 39) est formée d'un plastique duroplastique, en particulier d'un résine époxy, et l'au moins une couche de pré-imprégné (22, 23, 37, 38) est formée d'un plastique duroplastique renforcé par des fibres, en particulier d'une résine époxy renforcée par des fibres de verre et/ou renforcée par des fibres de carbone.

9. Élément structural (1, 12, 30) selon une des revendications 1 à 8, **caractérisé en ce que** le profilé de renforcement (2, 13) est un segment raidisseur (31) et la patte (24) est collée au moins par sections sur une bride intérieure (32) et/ou une bride extérieure du segment raidisseur (31).

10. Élément structural (1, 12, 30) selon la revendication 9, **caractérisé en ce que** les fibres de verre s'étendent dans les couches en matière plastique (9, 35, 41) de la patte (24) s'étendent sensiblement parallèlement à une direction périphérique du segment raidisseur (31).

11. Élément structural (1, 12, 30) selon une des revendications 1 à 8, **caractérisé en ce que** le profilé de renforcement (2, 13) est un support et la patte (5, 14, 24) est collée au moins par sections sur une bride du support.

12. Élément structural (1, 12, 30) selon la revendication 11, **caractérisé en ce que** les fibres de verre s'étendent dans les couches en matière plastique (9, 35, 41) de la patte (5, 14, 24) de manière sensiblement orientée dans le flux de forces.
